# EUROPÄISCHE PATENTSCHRIFT

(11) **EP 2 160 064 B1**
(45) Veröffentlichungstag und Bekanntmachung des Hinweises auf die Patenterteilung: **18.07.2012**
(21) Anmeldenummer: 08163104.6
(22) Anmeldetag: 27.08.2008
(51) Int. Cl.: H04W 64/00

(54) **Verfahren und Ortungsvorrichtung zur Ortung mindestens eines Mobilfunkteilnehmers**
Method and location device for locating at least one user in a mobile wireless network
Procédé et dispositif de localisation d'au moins un abonné de radio mobile

(43) Veröffentlichungstag der Anmeldung: 03.03.2010
(73) Patentinhaber: Tektronix International Sales GmbH, 8212 Neuhausen (CH)
(72) Erfinder: Kreher, Ralf, 12587, Berlin (DE); Polak, Martin, 13187, Berlin (DE)
(74) Vertreter: Schurack, Eduard F.

(56) Entgegenhaltungen:
- WO-A-2005/034558
- US-A1- 2003 008 668
- US-A1- 2007 202 887
- US-B1- 6 839 560
- FORSK: "RF Planning & Optimisation Software" ATOLL, VERSION 2.7, Januar 2008 (2008-01), Seiten 1-12, XP002512057

## Beschreibung

Die vorliegende Erfindung betrifft ein Verfahren sowie eine entsprechende Vorrichtung zur Ortung mindestens eines Mobilfunkteilnehmers in einem Mobilfunknetz, wobei in dem Mobilfunknetz der mindestens eine Mobilfunkteilnehmer mit und/oder ohne aktive Mobilfunkverbindung mindestens einmal einen Messbericht sendet, wobei in dem Messbericht eine Aufstellung vorgesehen ist, die mindestens zwei Sendestationen umfasst, wobei jeder Sendestation ein mit der Empfangsfeldstärke eines Signals von dieser Sendestation korrelierter Wert zugeordnet ist. Sie betrifft überdies eine entsprechende Ortungsvorrichtung sowie ein Computerprogrammprodukt zur Ausführung des Verfahrens.

Die Ortung von Mobilfunkteilnehmern mit hoher Genauigkeit ist aus mannigfaltigen Gründen von hoher Bedeutung. Mobilfunkteilnehmer bewegen sich fast unkorreliert im Gelände, während Services eines Mobilfunkanbieters genutzt werden können. Kommt es zu einem Problem mit der Verbindung, beispielsweise zu einem Call-Abbruch, so ist es für den Provider außerordentlich wichtig, den Ort zu lokalisieren, an dem das Problem aufgetreten ist. Derartige Probleme werden beispielsweise unter dem Begriff Coverage-Probleme zusammengefasst.

Ein aus dem Stand der Technik bekannter Ansatz sieht vor, die Position eines Mobilfunkteilnehmers bei einem passiven Monitoring an der luB-Schnittstelle zu bestimmen, indem ein bestimmter Messwert ausgewertet wird, der von dem Mobilfunkgerät an das Mobilfunknetz reportet wird. Im UMTS-Netz handelt es sich dabei um den CPICH RSCP Messwert. Hierin bezeichnet CPICH den Common Pilot Channel, d. h. ein Signal, das mit einer konstanten Leistung, insbesondere 2 W, von einer Basisstation, vorliegend einem NodeB, abgestrahlt wird. RSCP steht für Received Signal Code Power und gibt den Pegel an, mit dem das CPICH-Signal vom Mobilfunkgerät empfangen wurde. Alternativ wird der RSCP-Wert bezogen auf das Rauschen gemessen und an die Basisstation gesendet. Der sich dabei ergebende Wert ist unter der Bezeichnung Ec/No bekannt, wobei diese Abkürzung für Chip Energy Over Noise steht.

Anhand des CPICH RSCP oder Ec/No-Wertes kann mithilfe von Wellenausbreitungsmodellen die Position des Mobilfunkteilnehmers von Fall zu Fall errechnet werden. Ein bekanntes Wellenausbreitungsmodell ist unter der Bezeichnung COST HATA bekannt. Derartige Wellenausbreitungsmodelle werden für bestimmte Umgebungen durch aufwändige Verfahren angelegt, beispielsweise für die Innenstadt von Tokio, für die Innenstadt von Berlin usw. Durch derartige Wellenausbreitungsmodelle wird der ansonsten etwa exponentiell mit der Entfernung abfallende Pegel des RSCP oder des Ec/No-Messwerts etwas genauer spezifiziert, so dass zumindest für Umgebungen, für die derartige Modelle existieren, eine grobe Schätzung der Position des Mobilfunkteilnehmers möglich ist. Trotz alledem bleibt der sich für den Mobilfunkteilnehmer ergebende, potentielle Aufenthaltsort unerwünscht groß.

In dem Dokument US 2007/0202887 A1 ist ein Verfahren beschrieben, bei dem ein Mobiltelefon dadurch geortet wird, dass die Stärke von Signalen mehrerer Basisstationen von dem Mobiltelefon gemessen wird und anhand der Messungen eine geordnete Liste der Basisstationen gebildet wird. Diese geordnete Liste wird mit vorbereiteten Listen verglichen, die für eine Mehrzahl von Arealen erstellt worden sind. Bei Übereinstimmung der geordneten Liste mit einer der vorbereiteten Listen wird angenommen, dass sich das Mobiltelefon in dem entsprechenden Areal befindet. Die vorbereiteten Listen werden anhand von Messdaten gebildet werden, die auf Testfahrten gewonnen werden.

Dem Dokument US 2003/0008668 A1 entnimmt der Fachmann, dass sich anstelle von Messwerten Signalstärkewerte auch mittels eines Computers auf der Grundlage von RF-Vorhersagemodellen vorausberechnen lassen. Hierzu erfährt der Fachmann aber im selben Zusammenhang, dass solche Modelle sehr pauschal und deshalb ungenau sind.

Die Aufgabe der vorliegenden Erfindung besteht deshalb darin, ein Verfahren sowie eine Ortungsvorrichtung zur Ortung mindestens eines Mobilfunkteilnehmers und ein entsprechendes Computerprogrammprodukt zur Ausführung des Verfahrens bereitzustellen, mit dem eine möglichst genaue Ortung eines Mobilfunkteilnehmers bei möglichst geringem Aufwand ermöglicht wird.

Diese Aufgabe wird gelöst durch ein Verfahren mit den Merkmalen nach Patentanspruch 1, eine Ortungsvorrichtung mit den Merkmalen von Patentanspruch 9 sowie ein Computerprogrammprodukt mit den Merkmalen von Patentanspruch 10.

Der vorliegenden Erfindung liegt die Erkenntnis zugrunde, dass die obige Aufgabe optimal gelöst werden kann, wenn zu erwartende Messergebnisse herangezogen werden, die mittels eines aus dem Stand der Technik bekannten Funknetzplanungstools vorab berechnet wurden. Funknetzplanungsdaten sind deshalb besonders vorteilhaft, weil sie sehr genau sind und bereits - von jemand anderem für andere Zwecke - erfasst wurden und in einem elektronisch verarbeitbaren Format vorliegen. Funknetzplanungstools, wie beispielsweise das Programm Atoll der Firma Forsk, Blagnac, Frankreich (Atoll, RF Planning & Optimisation Software, Version 2.7, Forsk, Januar 2008), ermöglichen einem Provider für geographische Einheiten eines vorgebbaren geographischen Gebiets die zu erwartende Empfangsfeldstärke der in der geographischen Einheit zu empfangenden Sendestationen vorab zu berechnen, um damit eine möglichst lückenlose Versorgung sicherzustellen. Dabei werden für die Berechnung der Wellenausbreitung entscheidende Parameter, wie die topographische Beschaffenheit des Geländes, Höhe der Basisstation, Bebauung des Geländes usw., berücksichtigt. Das genannte Programm, beispielsweise, stellt die zu erwartenden Messergebnisse mit einer Auflösung von 24 m X 24 m zur Verfügung.

Derartige geographische Einheiten werden im Nachfolgenden mit "BlN" bezeichnet. Die von einem derartigen Funknetzplanungstool gelieferten Daten werden nachfolgend mit dem Namen Multi-Server-Map bezeichnet. In einer derartigen Multi-Server-Map sind für jede geographische Einheit eines bestimmten Funknetzes die erwarteten Signalpegel von bis zu sechs einander überlappenden Zellen abgelegt. Dabei wird im Nachfolgenden mit Zelle, unabhängig von der Belegung dieses Begriffs im Mobilfunkbereich, die kleinste adressierbare Einheit bezeichnet. Bei einem UMTS-Netz beispielsweise ist die komplette Abstrahlumgebung, d. h. 360°, einer Basisstation, die dort mit NodeB bezeichnet wird, in bis zu sechs getrennte Bereiche aufgeteilt. Jedem dieser Bereiche ist eine bestimmte Identifizierung zugeordnet, so dass jeder dieser Bereiche als kleinste adressierbare Einheit, d. h. Zelle, im Sinne der nachfolgenden Ausführungen zu verstehen ist, wenngleich die jedem Bereich zugeordnete Sendestation dieselbe ist. Entsprechendes gilt für andere Netzstandards, beispielsweise ein GSM-Netz. Nachfolgend kann zwar ein BIN einer Zelle entsprechen, das muss jedoch nicht der Fall sein. Üblicherweise ist eine Zelle um ein Vielfaches größer als ein BIN.

Eine derartige Multi-Server-Map wird demnach von einer erfindungsgemäßen Ortungsvorrichtung importiert und steht damit als Referenzraster zur Verfügung, das es ermöglicht, jedes beliebige Ereignis, beispielsweise einen Verbindungsabbruch, oder Messwerte, die im Laufe eines Calls erhoben werden, der Position des Mobilfunkteilnehmers zuzuordnen und anschließend graphisch darzustellen. Dies gelingt, da im Messbericht ebenfalls die Empfangsfeldstärken, allerdings die tatsächlichen, des Signals von einer Vielzahl von Sendestationen enthalten sind. Werden nunmehr sowohl die Sendestationen im Messbericht als auch die Sendestationen der Multi-Server-Map gegliedert und die Gliederungsergebnisse verglichen, so kann der Mobilfunkteilnehmer einer bestimmten geographischen Einheit zugeordnet werden, und zwar der, bei der sich eine Übereinstimmung nach mindestens einem vorgebbaren Kriterium ergeben hat. Die Genauigkeit der Positionsbestimmung ist dabei deutlich höher als beim aus dem Stand der Technik bekannten Verfahren, da nunmehr Parameter wie topographische Beschaffenheit des Geländes, Höhe der Basisstation, Bebauung des Geländes etc. in die Vorabberechnung eingeflossen sind. Außerdem entfällt die rechentechnisch aufwändige Kalkulation der Position mithilfe komplexer Formeln, was die Datenverarbeitung signifikant beschleunigt und eine Massenanalyse von Daten zum Zweck der Funknetzoptimierung ermöglicht.

Bei einer bevorzugten Ausführungsform besteht das vorgebbare Kriterium darin, dass die Reihenfolge der nach der Empfangsfeldstärke gegliederten Sendestationen, beginnend mit der Sendestation mit der größten Empfangsfeldstärke, für eine vorgebbare Zahl von Sendestationen, insbesondere für eine möglicht große Zahl von Sendestationen, identisch ist. In der Multi-Server-Map werden demnach die Sendestationen nach der Empfangsfeldstärke gegliedert und ebenso im Messbericht. Durch einfachen Vergleich kann auf Übereinstimmung geprüft werden und damit der Standort des Mobilfunkteilnehmers einer geographischen Einheit zugewiesen werden.

Bevorzugt ist das Mobilfunknetz ein UMTS-Netz, wobei der mit der Empfangsfeldstärke korrelierte Wert der RSCP-Wert oder der Ec/No-Wert ist. Alternativ kann es sich um ein GSM-Netz handeln, wobei der mit der Empfangsfeldstärke korrelierte Wert der GSMRSSI-Wert ist. Schließlich kommt die Erfindung insbesondere auch bei einem LTE-Netz in Betracht, wobei der mit der Empfangsfeldstärke korrelierte Wert dann der RSRP- (Reference Signal Received Power) oder der RSRQ-Wert (Reference Signal Received Quality) ist.

Bei der Vorausberechnung der Werte der Tabelle wird mindestens einer der folgenden Parameter berücksichtigt: Topographische Beschaffenheit des Geländes, Höhe der Basisstation, Bebauung des Geländes. Je mehr dieser Parameter berücksichtigt werden, umso genauer entsprechen die theoretischen, vorausberechneten Werte der Multi-Server-Map den tatsächlichen Messwerten, die im Messbericht übermittelt werden. Damit ist dann eine umso genauere Ortung des Mobilfunkteilnehmers möglich. Wenngleich in den obigen Ausführungen davon ausgegangen wurde, dass die vorausberechneten Werte Funknetzplanungsdaten darstellen, so können selbstverständlich auch andere Quellen dafür in Betracht kommen.

Die geographischen Einheiten sind bevorzugt Quadrate mit einer vorgebbaren Kantenlänge, insbesondere zwischen 20 und 550 m, bevorzugt 100 m.

Das Verfahren wird bevorzugt an der luB-Schnittstelle oder einer übergeordneten Schnittstelle des Mobilfunknetzes ausgeführt, insbesondere einer Basisstation, einem NodeB, einem eNodeB, einem RNC oder einer MME.

Bevorzugt umfasst der Sendebericht alle am aktuellen Standort des Mobilfunkteilnehmers empfangbaren Sendestationen, wobei die bereitgestellte Tabelle jeweils alle in der jeweiligen geographischen Einheit empfangbaren Sendestationen umfasst. Je mehr Sendestationen vom Messbericht beziehungsweise der Tabelle umfasst sind, umso eindeutiger lässt sich eine Zuordnung vornehmen und umso genauer lässt sich damit der Standort des Mobilfunkteilnehmers bestimmen.

Weitere vorteilhafte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für eine erfindungsgemäße Ortungsvorrichtung und ein erfindungsgemäßes Computerprogrammprodukt.

Im Nachfolgenden wird nunmehr ein Ausführungsbeispiel eines erfindungsgemäßen Verfahrens unter Bezugnahme auf die beigefügten Zeichnungen näher beschrieben. Es zeigen:
- Fig. 1: einen von einem Mobilfunkgerät gesendeten Measurement-Report so wie er an der luB-Schnittstelle vorliegt;
- Fig. 2: eine Multi-Server-Map mit beispielhaft sechs geographischen Einheiten, wo- bei die geographischen Einheiten nach Longitude und Latitude angeordnet sind;
- Fig. 3: einen Screen-Shot, der eine Landkarte zeigt, die mit einer Statistik über Call- Abbrüche überlagert ist; und
- Fig. 4: in schematischer Darstellung einen Signalflussgraphen betreffend ein erfin- dungsgemäßes Verfahren.

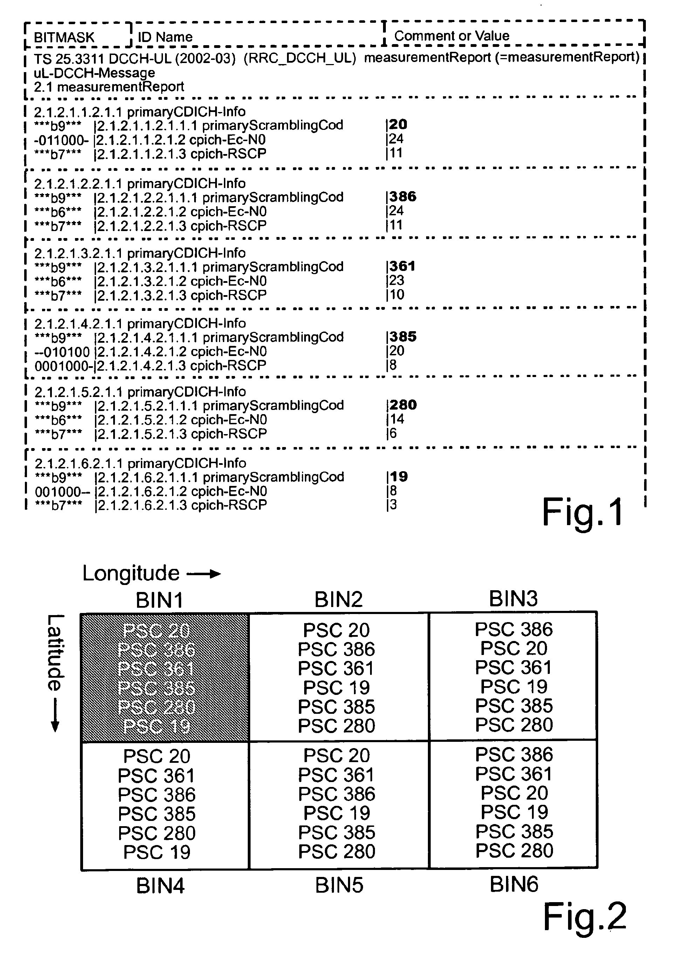

Fig. 1 zeigt beispielhaft einen Measurement-Report, d. h. einen Messbericht, den eine Mobilfunkeinrichtung an eine Basisstation gesendet hat, so wie er an der luB-Schnittstelle vorliegt. Dieser umfasst für sechs Zellen (primary Scrambling Code = PSC) 20, 386, 361, 385, 280, 19 die Empfangsfeldstärken jeweils für ein Ec/No-Signal 24, 24, 23, 20, 14, 8 sowie ein RSCP-Signal 11, 11, 10, 8, 6, 3. Wie dem Messbericht zu entnehmen ist, sind die Zellen bereits in der Reihenfolge der Empfangsfeldstärke, beginnend von der Zelle mit der größten Empfangsfeldstärke bis zur Zelle mit der geringsten Empfangsfeldstärke, gegliedert. Da die sich durch Gliederung des Ec/No-Werts ergebende Reihenfolge von der unterscheiden kann, die sich durch Gliederung nach dem RSCP-Wert ergibt, was allerdings vorliegend nicht der Fall ist, ist eine entsprechende Multi-Server-Map heranzuziehen, die für das entsprechende Signal, also Ec/No oder RSCP, berechnet wurde.

Fig. 2 zeigt eine derartige Multi-Server-Map, wobei vorliegend ein Auszug von sechs BINs 1 bis 6 dargestellt ist, die entsprechend ihrer räumlichen Anordnung, d. h. sortiert nach Längen- und Breitengrad, angeordnet sind. In jedem BIN 1 bis 6 sind die von einem Funknetzplanungstool, beispielsweise dem Produkt Atoll der Firma Forsk, die im jeweiligen BIN empfangbaren Sendestationen, gegliedert von der Sendestation mit der höchsten Empfangsfeldstärke bis zur Sendestation mit der niedrigsten Empfangsfeldstärke, eingetragen. Wie deutlich zu erkennen ist, unterscheidet sich die Reihenfolge der Sendestationen von BIN zu BIN. Ein Vergleich mit der Reihenfolge im Messbericht von Fig. 1 ergibt, dass nur das schwarz hinterlegte BIN dieselbe Reihenfolge aufweist. Der Mobilfunkteilnehmer befindet sich demnach in diesem BIN, das durch Längen- und Breitengrad eindeutig identifiziert ist.

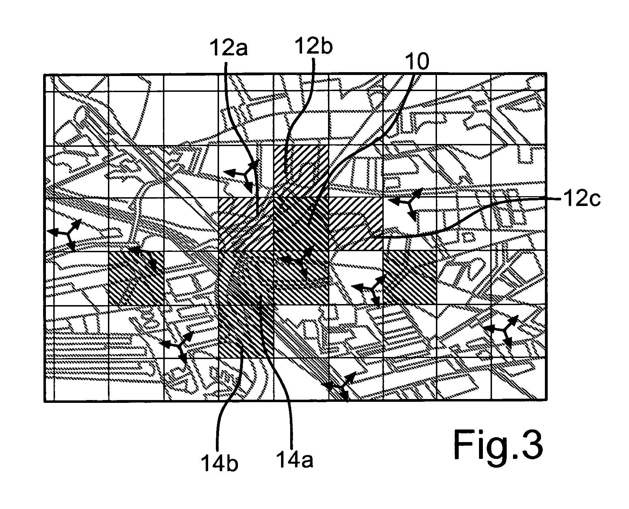

Fig. 3 zeigt einen Ausschnitt eines Screen-Shots einer Anzeigevorrichtung 20 einer erfindungsgemäßen Ortungsvorrichtung, wobei auf der Basis des erfindungsgemäßen Ortungsverfahrens Bins als Quadrate angezeigt sind. Dabei sind die Quadrate entsprechend einer Anzahl von Verbindungsabbrüchen, die in diesem Bin in einem vorgegebenen Zeitraum festgestellt wurden, eingefärbt. In dem Quadrat 10 wurden demnach mehr als 30 Verbindungsabbrüche über einen Zeitraum von 12 Stunden festgestellt, während in den Quadraten 12a, 12b, 12c jeweils zwischen 10 und 20 Verbindungsabbrüche in demselben Zeitraum festgestellt wurden. Die Anzahl der Verbindungsabbrüche in den Quadraten 14a, 14b beträgt unter 10 Verbindungsabbrüche pro 12 Stunden.

Die Ortungsvorrichtung ist überdies so ausgebildet, dass, wenn man mit dem Cursor auf eines der Quadrate 10, 12i, 14i geht, weitere detaillierte Informationen zum jeweiligen Bin erhält, beispielsweise wie viele Calls insgesamt verfolgt wurden, wie viele Calls abgebrochen wurden und um welche Calls es sich handelt. Durch Anklicken des entsprechenden aufgelisteten Calls können weitere Informationen zu dem Call und zu dem individuellen Fehler abgefragt werden, beispielsweise Startzeit, Stopzeit, Calldauer, Nummer des Mobilfunkteilnehmers, gerufene Nummer, Handsettyp, Grund des Verbindungsabbruchs, usw.

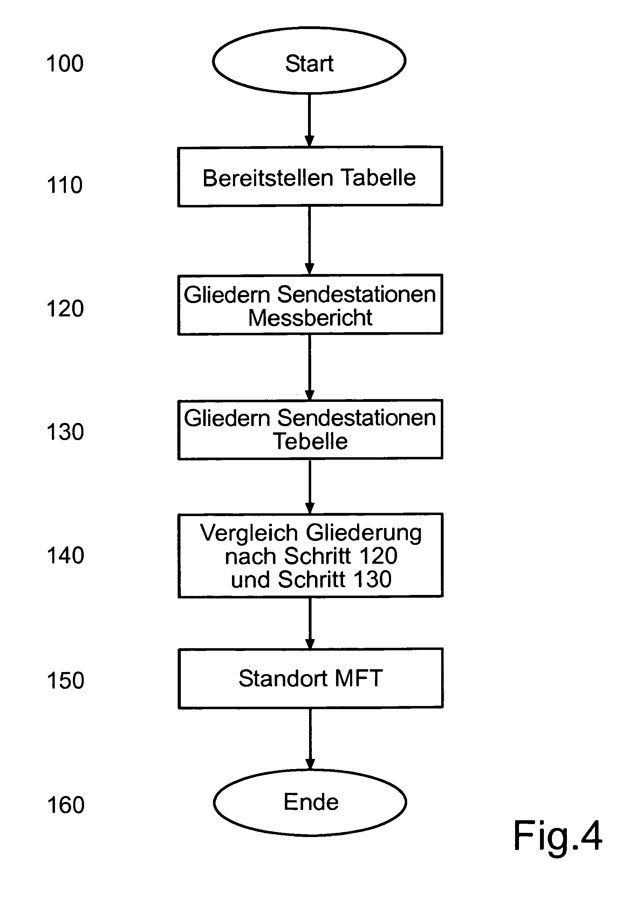

Fig. 4 zeigt nochmals in schematischer Darstellung einen Signalflussgraphen betreffend das erfindungsgemäße Verfahren. Dieses beginnt im Schritt 100. Zunächst wird im Schritt 110 eine Tabelle bereitgestellt, die nach geographischen Einheiten eines vorgebbaren geographischen Gebiets gegliedert ist, wobei für jede geographische Einheit eine Aufstellung vorgesehen ist, die mindestens zwei Sendestationen umfasst, wobei jeder Sendestation ein mit der Empfangsfeldstärke eines Signals von dieser Sendestation in der jeweiligen geographischen Einheit korrelierter, vorausberechneter Wert zugeordnet ist. In Schritt 120 werden die Sendestationen im Messbericht gemäß der mit der Empfangsfeldstärke des Signals von der jeweiligen Sendestation korrelierten Werte gegliedert. In Schritt 130 werden nunmehr auch für jede geographische Einheit die Sendestationen gemäß der mit der Empfangsfeldstärke des Signals von der jeweiligen Sendestation korrelierten Werte gegliedert. Anschließend werden im Schritt 140 die Gliederungsergebnisse der Schritte 120 und 130 verglichen. Durch Feststellen einer Übereinstimmung nach mindestens einem vorgebbaren Kriterium wird in Schritt 150 der Standort des Mobilfunkteilnehmers der geographischen Einheit zugeordnet. Das Verfahren endet im Schritt 160.

## Patentansprüche

1. Verfahren zur Ortung mindestens eines Mobilfunkteilnehmers in einem Mobilfunknetz, wobei in dem Mobilfunknetz der mindestens eine Mobilfunkteilnehmer mit und/oder ohne aktive Mobilfunkverbindung mindestens einmal einen Messbericht sendet, wobei in dem Messbericht eine Aufstellung vorgesehen ist, die mindestens zwei Sendestationen umfasst, wobei jeder Sendestation ein mit der Empfangsfeldstärke eines Signals von dieser Sendestation korrelierter Wert zugeordnet ist,
mit den folgenden Schritten:
a) Bereitstellen einer Tabelle, die nach geographischen Einheiten (BIN1 bis BIN6) eines vorgebbaren geographischen Gebiets gegliedert ist, wobei für jede geographische Einheit (BIN1 bis BIN6) eine Aufstellung vorgesehen ist, die mindestens zwei Sendestationen umfasst, wobei jeder Sendestation ein mit der Empfangsfeldstärke eines Signals von dieser Sendestation in der jeweiligen geographischen Einheit (BIN 1 bis BIN6) korrelierter Wert zugeordnet ist (110);
b) Gliedern der Sendestationen im Messbericht gemäß der mit der Empfangsfeldstärke des Signals von der jeweiligen Sendestation korrelierten Werte (120);
c) für jede geographische Einheit (BIN1 bis BIN6): Gliedern der Sendestationen gemäß der mit der Empfangsfeldstärke des Signals von der jeweiligen Sendestation korrelierten Werte (130);
d) Vergleich der Gliederungsergebnisse von Schritt b) und Schritt c) (140); und
e) Zuordnen des Standorts des Mobilfunkteilnehmers zu der geographischen Einheit (BIN1 bis BIN6), bei der der Vergleich nach Schritt d) eine Übereinstimmung nach mindestens einem vorgebbaren Kriterium ergeben hat (150);
**dadurch gekennzeichnet, dass**
bei dem Schritt a) die mit der Empfangsfeldstärke korrelierten Werte vorausberechnete Werte sind, die Funknetzplanungsdaten darstellen.

2. Verfahren nach Anspruch 1,
**dadurch gekennzeichnet,**
**dass** das vorgebbare Kriterium darin besteht, dass die Reihenfolge der nach der Empfangsfeldstärke gegliederten Sendestationen, beginnend mit der Sendestation mit der größten Empfangsfeldstärke, für eine vorgebbare Zahl von Sendestationen, insbesondere für eine möglichst große Zahl von Sendestationen, identisch ist.

3. Verfahren nach einem der Ansprüche 1 oder 2,
**dadurch gekennzeichnet,**
**dass** das Mobilfunknetz ein UMTS-Netz ist, wobei der mit der Empfangsfeldstärke korrelierte Wert ein RSCP-Wert oder ein Ec/No-Wert ist; oder
ein GSM-Netz, wobei der mit der Empfangsfeldstärke korrelierte Wert ein GSMRSSI-Wert ist; oder
ein LTE- Netz, wobei der mit der Empfangsfeldstärke korrelierte Wert ein RSRP- oder ein RSRQ-Wert ist.

4. Verfahren nach einem der vorhergehenden Ansprüche,
**dadurch gekennzeichnet,**
**dass** bei der Vorausberechnung der Werte der Tabelle mindestens einer der folgenden Parameter berücksichtigt wird: topographische Beschaffenheit des Geländes; Höhe der Sendestation; Bebauung des Geländes.

5. Verfahren nach einem der vorhergehenden Ansprüche,
**dadurch gekennzeichnet,**
**dass** die geographischen Einheiten Quadrate mit einer vorgebbaren Kantenlänge, insbesondere zwischen 20 und 550 m, bevorzugt 100 m, sind.

6. Verfahren nach einem der vorhergehenden Ansprüche,
**dadurch gekennzeichnet,**
**dass** das Verfahren an der luB-Schnittstelle oder einer übergeordneten Schnittstelle des Mobilfunknetzes ausgeführt wird, insbesondere an einer Basisstation, einem NodeB, einem eNodeB, einem RNC oder einer MME.

7. Verfahren nach einem der vorhergehenden Ansprüche,
**dadurch gekennzeichnet,**
**dass** der Messbericht alle am aktuellen Standort des Mobilfunkteilnehmers empfangbaren Sendestationen umfasst, wobei die bereitgestellte Tabelle jeweils alle in der jeweiligen geographischen Einheit (BIN1 bis BIN6) empfangbaren Sendestationen umfasst.

8. Ortungsvorrichtung zur Ortung mindestens eines Mobilfunkteilnehmers in einem Mobilfunknetz, wobei in dem Mobilfunknetz der mindestens eine Mobilfunkteilnehmer mit und/oder ohne aktive Mobilfunkverbindung mindestens einmal einen Messbericht sendet, wobei in dem Messbericht eine Aufstellung vorgesehen ist, die mindestens zwei Sendestationen umfasst, wobei jeder Sendestation ein mit der Empfangsfeldstärke eines Signals von dieser Sendestation korrelierter Wert zugeordnet ist, und wobei
der Ortungsvorrichtung eine Speichervorrichtung zugeordnet ist, in der eine Tabelle abgelegt ist, die nach geographischen Einheiten (BIN1 bis BIN6) eines vorgebbaren geographischen Gebiets gegliedert ist, wobei für jede geographische Einheit (BIN1 bis BIN6) eine Aufstellung vorgesehen ist, die mindestens zwei Sendestationen umfasst, wobei jeder Sendestation ein mit der Empfangsfeldstärke eines Signals von dieser Sendestation in der jeweiligen geographischen Einheit (BIN1 bis BIN6) korrelierter Wert zugeordnet ist;
wobei die Ortungsvorrichtung ausgelegt ist,
- die Sendestationen im Messbericht gemäß der mit der Empfangsfeldstärke des Signals von der jeweiligen Sendestation korrelierten Werte zu gliedern;
- für jede geographische Einheit (BIN1 bis BIN6) die Sendestationen gemäß der mit der Empfangsfeldstärke des Signals von der jeweiligen Sendestation korrelierten Werte zu gliedern;
- die jeweiligen Gliederungsergebnisse zu vergleichen; und
- dem Standort des Mobilfunkteilnehmers die geographische Einheit (BIN1 bis BIN6) zuzuordnen, bei der der Vergleich eine Übereinstimmung nach mindestens einem vorgebbaren Kriterium ergeben hat;
**dadurch gekennzeichnet, dass**
die mit der Empfangsfeldstärke korrelierten Werte in der Tabelle vorausberechnete Werte sind, die Funknetzplanungsdaten darstellen.

9. Computerprogrammprodukt zur Ausführung des Verfahrens nach einem der Ansprüche 1 bis 7.

## Claims

1. Method for locating at least one mobile radio subscriber in a mobile radio network, wherein in the mobile radio network the at least one mobile radio subscriber with and/or without active mobile radio communication transmits a measurement report at least once, wherein a list is provided in the measurement report, which includes at least two transmitting stations, wherein a value correlated with the receive field strength of a signal from this transmitting station is associated with each transmitting station,
including the following steps:
a) providing a table organized according to geographic units (BIN1 to BIN6) of a presettable geographic area, wherein a list is provided for each geographic unit (BIN1 to BIN6), which includes at least two transmitting stations, wherein a value correlated with the receive field strength of a signal from this transmitting station in the respective geographic unit (BIN1 to BIN6) is associated with each transmitting station (110);
b) organizing the transmitting stations in the measurement report according to the values correlated with the receive field strength of the signal from the respective transmitting station (120);
c) for each geographic unit (BIN1 to BIN6): organizing the transmitting stations according to the values correlated with the receive field strength of the signal from the respective transmitting station (130);
d) comparing the organization results of step b) and step c) (140); and
e) associating the location of the mobile radio subscriber with the geographic unit (BIN1 to BIN6), with which the comparison according to step d) has resulted in coincidence according to at least one presettable criterion (150);
**characterized in that**
in step a), the values correlated with the receive field strength are precalculated values representing radio network planning data.

2. Method according to claim 1,
**characterized in that**
the presettable criterion is **in that** the order of the transmitting stations organized according to the receive field strength, beginning with the transmitting station with the largest receive field strength, is identical for a presettable number of transmitting stations, in particular for a number of transmitting stations as large as possible.

3. Method according to any one of claims 1 or 2,
**characterized in that**
the mobile radio network is an UMTS network, wherein the value correlated with the receive field strength is an RSCP value or an Ec/No value; or
a GSM network, wherein the value correlated with the receive field strength is a GSMRSSI value; or
an LTE network, wherein the value correlated with the receive field strength is an RSRP or an RSRQ value.

4. Method according to anyone of the preceding claims,
**characterized in that**
in the pre-calculation of the values of the table, at least one of the following parameters is taken into account: topographic character of the terrain; altitude of the transmitting station; development of the terrain.

5. Method according to anyone of the preceding claims,
**characterized in that**
the geographic units are squares with a presettable edge length, in particular between 20 and 550 m, preferably of 100 m.

6. Method according to anyone of the preceding claims,
**characterized in that**
the method is executed on the luB interface or a superordinate interface of the mobile radio network, in particular on a base station, a NodeB, an eNodeB, an RNC or an MME.

7. Method according to anyone of the preceding claims,
**characterized in that**
the measurement report includes all of the transmitting stations receivable at the current location of the mobile radio subscriber, wherein the provided table includes all of the transmitting stations receivable in the respective geographic unit (BIN1 to BIN6), respectively.

8. Locating device for locating at least one mobile radio subscriber in a mobile radio network, wherein in the mobile radio network the at least one mobile radio subscriber with and/or without active mobile radio communication transmits a measurement report at least once, wherein a list is provided in the measurement report, which includes at least two transmitting stations, wherein a value correlated with the receive field strength of a signal from this transmitting station is associated with each transmitting station, and wherein a storage device is associated with the locating device, in which a table is stored, which is organized according to geographic units (BIN1 to BIN6) of a presettable geographic area, wherein a list is provided for each geographic unit (BIN1 to BIN6), which includes at least two transmitting stations, wherein a value correlated with the receive field strength of a signal from this transmitting station in the respective geographic unit (BIN1 to BIN6) is associated with each transmitting station;
wherein the locating device is configured to
- organize the transmitting stations in the measurement report according to the values correlated with the receive field strength of the signal from the respective transmitting station;
- organize the transmitting stations according to the values correlated with the receive field strength of the signal from the respective transmitting station for each geographic unit (BIN1 to BIN6);
- compare the respective organization results; and
- associate the geographic unit (BIN1 to BIN6) with the location of the mobile radio subscriber, with which the comparison has resulted in coincidence according to at least one presettable criterion;
**characterized in that**
the values correlated with the receive field strength in the table are precalculated values representing radio network planning data.

9. Computer program product for executing the method according to any one of claims 1 to 7.

## Revendications

1. Procédé de localisation, au moins, d'un abonné au service radiotéléphonique mobile dans un réseau de téléphonie mobile, moyennant quoi, dans le réseau de téléphonie mobile, le au moins un abonné au service radiotéléphonique mobile envoie au moins une fois un rapport de mesure avec et / ou sans liaison active avec le service radiotéléphonique mobile, moyennant quoi, dans le rapport de mesure, une liste est prévue, qui comprend au moins deux stations émettrices, moyennant quoi une valeur, corrélée avec l'intensité de champ à la réception d'un signal par cette station émettrice est affectée à chaque station émettrice,
avec les étapes suivantes, consistant à :
a) mettre à disposition une table, qui est divisée d'après des unités géographiques (BIN1 à BIN6) d'une zone géographique pouvant être prédéfinie, moyennant quoi, pour chaque unité géographique (BIN1 à BIN6), une liste est prévue, qui comprend au moins deux stations émettrices, moyennant quoi une valeur, corrélée avec l'intensité de champ à la réception d'un signal par cette station émettrice, est affectée (110) à chaque station émettrice dans l'unité géographique (BIN1 à BIN6) respective ;
b) diviser les stations émettrices dans le rapport de mesure conformément aux valeurs, corrélées (120) avec l'intensité de champ à la réception du signal par la station émettrice respective ;
c) diviser, pour chaque unité géographique (BIN1 à BIN6), les stations émettrices conformément aux valeurs, corrélées (130) avec l'intensité de champ à la réception du signal par la station émettrice respective ;
d) comparer les résultats de la division de l'étape b) et de l'étape c) (140) et
e) affecter l'emplacement de l'abonné au service radiotéléphonique mobile à l'unité géographique (BIN1 à BIN6), pour laquelle la comparaison a produit (150), suivant l'étape d), une concordance d'après au moins un critère pouvant être prédéfini ;
**caractérisé en ce que**
lors de l'étape a), les valeurs, corrélées avec l'intensité de champ à la réception, sont des valeurs précalculées, qui représentent les données de planification du réseau de radiocommunications.

2. Procédé selon la revendication 1,
**caractérisé en ce**
**que** le critère, pouvant être prédéfini, consiste en ce que la suite des stations émettrices, divisées d'après l'intensité de champ à la réception, en commençant par la station émettrice avec la plus grande intensité de champ à la réception, est identique, pour un nombre pouvant être prédéfini de stations émettrices, en particulier pour un nombre le plus grand possible de stations émettrices.

3. Procédé selon l'une des revendications 1 ou 2,
**caractérisé en ce**
**que** le réseau de téléphonie mobile est un réseau UMTS, moyennant quoi la valeur, corrélée avec l'intensité de champ à la réception, est une valeur RSCP ou une valeur Ec/No ou
un réseau GSM, moyennant quoi la valeur, corrélée avec l'intensité de champ à la réception est une valeur GSMRSSI ou
un réseau LTE, moyennant quoi la valeur, corrélée avec l'intensité de champ à la réception, est une valeur RSRP ou RSRQ.

4. Procédé selon l'une des revendications précédentes,
**caractérisé en ce**
**que**, lors du précalcul des valeurs de la table, au moins l'un des paramètres suivants est pris en compte : nature topographique du terrain, hauteur de la station émettrice, aménagement du terrain.

5. Procédé selon l'une des revendications précédentes,
**caractérisé en ce**
**que** les unités géographiques sont des carrés avec une longueur de bord pouvant être prédéfinie, en particulier entre 20 et 550 m, de préférence 100 m.

6. Procédé selon l'une des revendications précédentes,
**caractérisé en ce**
**que** le procédé est exécuté sur l'interface luB ou une interface privilégiée du réseau de téléphonie mobile, en particulier sur une station de base, un NodeB, un eNodeB, un RNC ou une MME.

7. Procédé selon l'une des revendications précédentes,
**caractérisé en ce**
**que** le rapport de mesure comprend toutes les stations émettrices, pouvant être reçues à l'emplacement actuel de l'abonné au service radiotéléphonique mobile, moyennant quoi la table, mise à disposition, comprend, respectivement, toutes les stations émettrices, pouvant être reçues dans l'unité géographique (BIN1 à BIN6) respective.

8. Appareil de localisation, destiné à localiser au moins un abonné au service radiotéléphonique mobile dans un réseau de téléphonie mobile, moyennant quoi, dans le réseau de téléphonie mobile, le au moins un abonné au service radiotéléphonique mobile envoie au moins une fois un rapport de mesure avec et / ou sans liaison active avec le service radiotéléphonique mobile, moyennant quoi,dans le rapport de mesure, une liste est prévue qui comprend au moins deux stations émettrices, moyennant quoi une valeur, corrélée avec l'intensité de champ à la réception d'un signal par cette station émettrice, est affectée à chaque station émettrice et moyennant quoi
un appareil d'enregistrement est affecté à l'appareil de localisation, dans lequel est stocké une table, qui est divisée par unités géographiques (BIN1 à BIN6) d'une zone géographique pouvant être prédéfinie, moyennant quoi,pour chaque unité géographique (BIN1 à BIN6), une liste est prévue, qui comprend au moins deux stations émettrices, moyennant quoi une valeur, corrélée avec l'intensité de champ à la réception d'un signal par cette station émettrice, est affectée à chaque station émettrice dans l'unité géographique (BIN1 à BIN6) respective;
moyennant quoi l'appareil de localisation est conçu,
- pour diviser les stations émettrices, dans le rapport de mesure, conformément aux valeurs, corrélées avec l'intensité de champ à la réception du signal par la station émettrice respective ;
- pour diviser, pour chaque unité géographique (BIN1 à BIN6), les stations émettrices conformément aux valeurs, corrélées avec l'intensité de champ à la réception du signal par la station émettrice respective ;
- pour comparer les résultats respectifs de la division et
- pour affecter à l'emplacement de l'abonné au service radiotéléphonique mobile l'unité géographique (BIN1 à BIN6), pour laquelle la comparaison a produit une concordance d'après au moins un critère pouvant être prédéfini ;
**caractérisé en ce que**
les valeurs dans le tableau, corrélées avec l'intensité de champ à la réception, sont des valeurs précalculées, qui représentent les données de planification du réseau de radiocommunications.

9. Produit de programme informatique, destiné à exécuter le procédé selon l'une des revendications 1 à 7.
